Europäisches Patentamt

European Patent Office

Office européen des brevets

(19)

(11) Publication number: **0 214 302**
A1

(12)

# EUROPEAN PATENT APPLICATION
published in accordance with Art. 158(3) EPC

(21) Application number: 86901499.3

(22) Date of filing: 21.02.86

Data of the international application taken as a basis:

(86) International application number:
PCT/JP86/00082

(87) International publication number:
WO86/04937 (28.08.86 86/19)

(51) Int. Cl.⁴: **D 01 F 9/12**
C 30 B 29/60, C 30 B 29/62

(30) Priority: 22.02.85 JP 32818/85

(43) Date of publication of application:
18.03.87 Bulletin 87/12

(84) Designated Contracting States:
DE FR GB

(71) Applicant: SHOWA DENKO K.K.
13-9, Shiba Daimon 1-chome
Minato-ku, Tokyo 105(JP)

(72) Inventor: KOMATSU, Yasuto
3392-1, Minamiharacho
Omachi-shi Nagano 398(JP)

(72) Inventor: ENDO, Morinobu
615, Kitaharacho
Suzaka-shi Nagano 382(JP)

(74) Representative: Strehl, Schübel-Hopf, Groening, Schulz
Widenmayerstrasse 17 Postfach 22 03 45
D-8000 München 22(DE)

(54) GAS PHASE METHOD OF MANUFACTURING CARBON FIBERS.

(57) In a method of manufacturing carbon fiber by thermally decomposing a compound of hydrocarbon (6, 11) in a furnace (1) under the presence of transition metal or a powdered compound thereof (2, 11, 22), combustion gas of fuel (7, 11) is introduced into the furnace (1) so as to maintain a carbon fiber deposition temperature and thereby improve the productivity of the carbon fiber.

Fig. 1

EP 0 214 302 A1

0214302

- 1 -

# DESCRIPTION

TITLE OF THE INVENTION
A Method of Producing Carbon Fiber by a Gas-Phase Method

TECHNICAL FIELD

The present invention relates to a method of producing a carbon fiber by a gas-phase method, and more particularly, to a method which is appropriate for continuously producing a fine carbon fiber including a whisker.

BACKGROUND ART

Methods in which a hydrocarbon, such as benzene, is thermally decomposed in the presence of a transition metal-powder or transition metal compound to form carbon fiber, are known, but the production amount per unit volume of a reaction furnace of these methods is low, for example, 1 ~ 2 g/1 ℓ of furnace volume per hour, and therefore, the energy cost for heating a furnace is high. This means that the carbon fiber cannot be provided as cheaply as a commercially available carbon fiber produced by baking organic synthetic fiber.

DISCLOSURE OF THE INVENTION

It is an object of the present invention to enhance the production amount of carbon fiber, heretofore a problem, and to enhance a thermal efficiency during the production.

The present invention is a method for depositing a carbon fiber, in which the furnace interior is maintained at a temperature required for the deposition of a carbon fiber by, for example, directly introducing the combustion gas of a fuel into the furnace interior, generating the combustion gas in the furnace interior, and at the same time, copresenting a hydrocarbon compound and fine particles of a transition metal or compound of the transition metal.

Heretofore, the carbon fiber produced by a gas phase method has generally been produced by mixing a carrier gas of hydrogen gas with the hydrocarbon gas. According to research by the present inventors, however, it was found that the carbon fiber produced by a gas phase method can be produced even in the further presence of an $N_2$ gas, CO gas, $CO_2$ gas, and $H_2O$ gas. This fact, that the fibrous carbon is deposited even in those gas mixture, leads to a production of the fiber in the presence of a fuel combustion gases.

Heretofore, the copresence of hydrogen has been allegedly advantageous for depositing a carbon fiber from the hydrocarbon gas, but this hydrogen was generated due to decomposition of the hydrocarbon. Particularly, when using a hydrocarbon having a high H/C, such as $CH_4$ or the like, the production of a carbon fiber by the gas phase method is possible without introducing hydrogen from the outside. Further, if necessary, the addition of a hydrogen gas can be carried out, which is preferred when using a hydrocarbon gas having a low H/C. Furthermore, when sulfur or a sulfur compound is supplied into a reaction furnace, the thermal decomposition of hydrocarbon can be controlled so as to stably deposit a carbon fiber.

The present invention is specifically described hereinafter in accordance with the embodiments thereof.

For inplementing the present invention, a heat-resistant reaction furnace is prepared which is provided with an introduction port of combustion flame as the heating source, a gas-exhaust port, and an inlet port for feeding a hydrocarbon-series compound as the raw material of a fiber and a powder of a transition metal or a compound thereof, and if necessary, a carrier gas. This reaction furnace is preferably covered with heat-insulation material having a good heat insulating property, such as silica wool, alumina fiber, or the like. The combustion fuel gas may be generated by a Bunsen burner.

Note, a burner which allows pressurization of the fuel and air, and a quantitative feed in of the same, is industrially preferred.

The ratio of incorporation of soot in the fiber can be reduced under a combustion condition using a smaller amount of air, in place of the ordinary combustion condition for burning the fuel used only as a heating source. The fuel may be any combustible material, such as methane, propane, kerosine, and the like. The hydrocarbon-bearing compounds used as the raw material for the carbon fiber are a gas or a volatile liquid. Methane, propane, benzene, toluene, and the like are industrially utilizable. These compounds not only comprise hydrocarbon but also may contain N, S, O, and the like.

Examples of the hydrocarbon bearing compounds utilizable in the present invention are alkane compounds other than methane and ethane, alkene compounds such as ethylene and butadiene, alkyne compounds such as acetylene, aryl hydrocarbon compounds such as stylene, aromatic hydrocarbons having a fused ring such as indene, naphthalene, phenanthrene, and the like, cyclo-paraffin compounds such as cyclopropane, cyclohexane, and the like, cycloolefin compounds such as cyclopentene, cyclohexene, and the like, aliphatic hydrocarbons having a fused ring such as steroid, and the like, sulfur-containing aliphatic compounds such as methylthiole, methylethyl sulfide, dimethyl thioketone, and the like, and sulfur-containing heterocyclic compounds such as phenylthiole and diphenyl sulfide, such as benzothiophene, thiophene, and the like.

In the present invention, the hydrocarbon series compounds may be used identically for the raw material of the carbon fiber and for the fuel. When an aromatic compound, such as benzene, is used for the raw material of the carbon fiber, the use of a carrier gas, such as hydrogen, in combination reduces the soot.

In the present invention, a region of the reaction furnace for forming the carbon fiber must be under a reducing atmosphere and have a partial presence of unburnt hydrocarbon compound (the description hereinafter is made with regard to hydrocarbon as representative).

When because of an incomplete combustion of a burner a part of the hydrocarbon of a fuel remains in the combustion product, a hydrocarbon other than the fuel need not be added to the reaction furnace. When the combustion in the burner is complete, hydrocarbon gas must be added and, if necessary, hydrogen gas. These gases may be partly burnt, but the unburnt hydrocarbon gas must remain as described above.

Iron fine powder is frequently used as the additive transition-metal compound, but Ni, Co or an alloy thereof, and an organic metal compound, such as ferrocene, nickelocene, and the like can be added. As the fine powder, a 300 $\overset{\circ}{A}$ or less ultrafine powder is preferred. For the method of addition of the metal fine powder, it may be thrown into the furnace through a port thereof, thereby dispersing it over a certain entire surface in the furnace, or it may be put in through a port of the furnace and dispersed by a gas stream in the furnace. Where a volatile compound is used, it is thrown into the furnace as it is or is dissolved in a solvent and is dropped or injected therein. Throwing, dropping, or injecting is preferably carried out consecutively, because the stream in the reaction furnace is strong and thus the volatile compound is liable to be scattered, which will necessitate a constant feeding thereof into the furnace. When the solvent to be used is soluble in the hydrocarbon bearing compounds as the raw material, the former is preferably dissolved in the latter, thereby using the transition metal compound and hydrocarbon bearing compound together.

In the combustion furnace used in the present invention, since the stream is more violent than heretofore, the carbon fiber formed is blown out and deposited on the exhaust port or outside thereof, thus the exhaust port should be thick and be equipped with a collector in the form of a net.

An example of the operating conditions is now described. First, a burner is ignited and a furnace is heated. The heating temperature of a furnace may be from 500°C to 2000°C. The preferred temperature varies depending upon the kinds of raw material and additive metal used (the above mentioned transition metal and a compound thereof). For example, when the iron-series metal or compound thereof is added, a temperature of 800°C ∿ 1300°C is preferred, and if a nickel series is used, a temperature of 900°C to 1400°C is preferred.

When the furnace temperature reaches a predetermined temperature, hydrocarbon gas as the raw material, the additive metal compound, and, if necessary, a carrier gas, are injected into the furnace separately or together. If the additive metal compound is preliminarily present in the furnace, a further additive metal compound is necessarily not injected.

A few minutes after the throwing in of the raw material, fine pieces, which are discernible as fibers by the naked eye, are actively deposited as a mixture with the soot-like material. This soot-like material is deep black at the beginning, but much of this material soon becomes grey.

Observation of these grey parts by a microscope reveals that they consist of elastic matte (cotton) ultrafine fibers 1 to 2 μm, but mostly 1 μm or less, in diameter. No sharp peaks are obtained by X-ray diffractometry of the fiber, and when it is heat treated at 2500°C, the sharp peaks of a graphite appear at the lattice constant Co of approximately 6.71 Å. The fibers, therefore, are graphite.

The examples are hereinafter described with reference to the drawings.

BRIEF DESCRIPTION OF THE DRAWINGS

Figure 1 is a schematic cross sectional drawing of an example of the device used in the method according to the present invention.

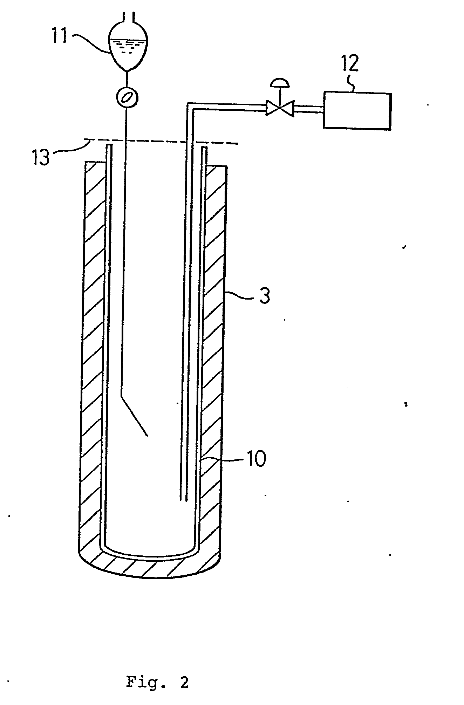

Figures 2 and 3 are schematic cross sectional drawings showing other embodiments of the devices also used in the method according to the present invention.

BEST MODE FOR CARRYING OUT THE INVENTION

(Example 1)

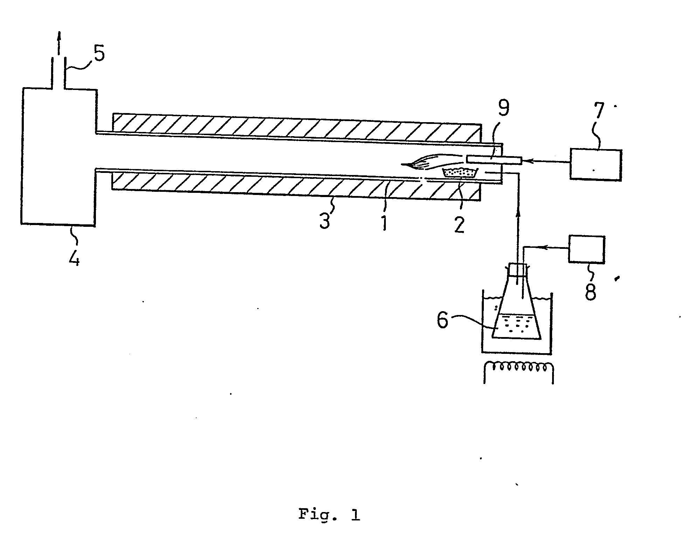

In the internal heating type-combustion furnace as shown in Fig. 1, the heat insulating material 3 is wound around a mullite tube 1 having an inner diameter of 80 mm. A porcelain boat, in which 0.5 g of iron fine powder having a particle diameter of 300 Å was held, was deposited within that tube. Commercially available propane 7 was used as the fuel and was ignited and burnt by a burner 9 with the aid of air in an approximately theoretical amount. When the highest temperature of inner wall of the mullite tube 1 reached 500°C, the hydrogen gas 8, which flew over the liquid level of benzene 6 maintained at 40°C, was introduced at a rate of 20 l/minute into the mullite tube 1. The introduction was maintained for 30 minutes, while the temperature of the furnace-inner wall was raised to 1100°C. The exhaust gas was burnt at an exhaust port 5. After cooling, matter in the form of soot and fiber adhered on the wall surface of the mullite tube and in the collecting tank 4. Observation by a microscope revealed that, in the matter in the form of a soot, fibrous carbon and carbon black having a diameter of from 0.05 to 0.1 μm were copresent.

Observation of the soot-like matter by a microscope revealed that, fibourous carbon and carbon black were copresent. The fiborous carbon has various shapes and sizes, having typical diameter of from 0.05 to 0.1 μ and assumed length of from 10 μ to 5 mm.

Observation of the fibourous deposits, on the other hand, revealed feather like and its diameter of from 0.1

to 0.5 μm and its length of from 2 to 5 mm mostly. These were heat treated at 2500°C in an inert gas atmosphere and then subjected to X-ray diffraction, which revealed a graphite lattice constant of Co = 6.712 Å.

(Example 2)

Silica wool as the heat insulating material 3 was wound around a crucible 10 made of alumina ceramic and having an inner diameter of 100 mm. While air was introduced into the bottom of the crucible 10 by a compressor, a solution 11 of benzene saturated with ferrocene at 25°C was dropped at approximately one drop per second and was ignited.

When approximately 5 minutes had lapsed after the introduction of air at an adjusted introduction rate, the combustion became stable and vigorous. The crucible was then covered with a metal net 13 having 20 meshes, and after 20 minutes, the metal net was clogged with soot-like matter. The deep black parts and grey parts were distinguished in the soot-like matter. Observation revealed that the grey parts were fibrous and were 0.1 to 0.3 μm in diameter and 5 μm to 5 mm in length. The X-ray diffraction revealed the same results as in Example 2.

(Example 3)

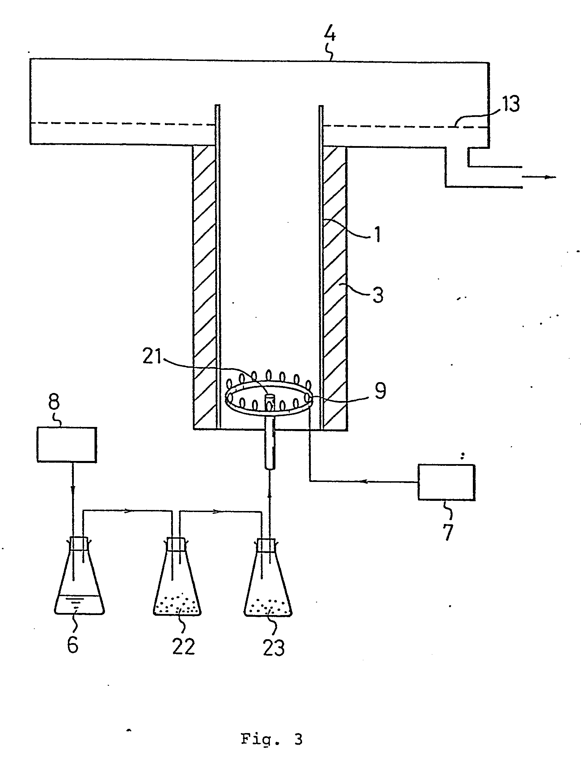

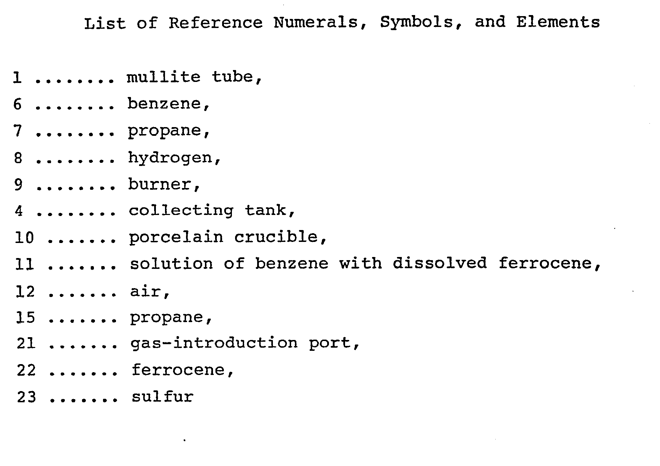

In the inner heating type-combustion furnace as shown in Fig. 3, the heat insulating material 3 was wound around the mullite tube 1 having an inner diameter of 100 mm. A ring-type burner 9 was installed in the conduit. Commercially available propane 7 was used as the fuel and was ignited and burnt by the burner 9 with the aid of air in an approximately theoretical amount. When the temperature in the tube reached a predetermined temperature, the hydrogen gas 8, which had passed over benzene, ferrocene, and sulfur, was introduced into the tube at a rate of 20 l/minute. The gas-introduction port 21 was positioned at the center of the ring-type burner 9.

When 1 hour had lapsed after the gas introduction, the experiment was stopped, and the apparatus allowed to cool. In the case of a furnace interior temperature of 1350°C, however, the metal net 13 became clogged during the experiment and, therefore, the experiment was interrupted. After allowing it to cool, the collecting tank was opened. The cotton-like deposits completely filled the collecting tank and the metal mesh 13 for collection. The cotton-like deposits were adhered on the wall of the mullite tube but only in a small amount. Table 1 shows experiments in which the furnace temperature was controlled by the combustion amount of the burner.

Table 1

| Furnace Temperature (°C) | Deposition Amount (g) | Deposition Time (minute) | Diameter of Deposited Fiber | Remarks |
|---|---|---|---|---|
| 600 | 125 | 60 | 0.1 μ or less | Much soot |
| 900 | 300 | 60 | approx. 0.1 μ | mainly composed of fiber |
| 1050 | 550 | 60 | 0.1 ∿ 0.5 μ | " |
| 1200 | 570 | 60 | " | " |
| 1350 | 210 | 20 | 0.1 ∿ 1.0 μ | Much soot |

(Comparative Example)

A mullite tube having an outer diameter of 75 mm and length of 500 mm, within which iron fine powder 100 Å in average particle diameter was dispersed, was inserted in a mullite tube having an inner diameter of 80 mm and length of 1.5 m.

Hydrogen gas saturated with benzene vapor at 25°C was introduced into the furnace, which was maintained at 1050°C by external electric heating, at 0.5 ℓ per minute.

The reaction was carried out for 5 hours, followed by allowing the apparatus to cool. The weight of carbon fiber formed was 6.5 g, which corresponds to a productivity of 0.5 g per liter of furnace volume, per hour.

INDUSTRIAL APPLICABILITY

According to the present invention, it is possible to produce carbon fiber by an inner heating type combustion furnace which exhibits a very high thermal efficiency, and by an energy source cheaper than electric power, so that the production cost is much cheaper than the conventional methods.

In addition, although the effects are subsidiary, the strong gas stream due to the combustion flame blows the fiber formed out of the furnace, and therefore, the reaction can be continued over a long period of time even by a small volume furnace. Accordingly, the present invention greatly contributes to a reduction of the volume of a furnace and, hence, saves energy. The fiber obtained by the method according to the present invention can be dispersed, for example, in an epoxy resin, and injection molded to yield a highly elastic body which can be used for sport goods and the like.

## CLAIMS

1. A method of producing carbon fiber by a hydrocarbon-series compound (6, 11) and fine particles of a transition metal (2) or a compound of said metal (11, 22) and, if necessary, a carrier gas (8), characterized by the presence of a combustion gas of a fuel (7, 11) in a furnace (1) maintaining a temperature at which a carbon fiber is deposited.

2. A production method according to claim 1, wherein said furnace (1) is heated to 500°C to 2000°C by said combustion gas.

3. A production method according to claim 1, wherein said hydrocarbon-series compound (6) and said fuel (7) are used separately.

4. A production method according to claim 1, wherein said hydrocarbon-series compound (11) and said fuel (11) are identically used.

5. A production method according to claim 1, wherein a sulfur gas or a sulfur compound gas is fed into the furnace (1).

Fig. 1

Fig. 2

0214302

Fig. 3

0214302

List of Reference Numerals, Symbols, and Elements

1 ........ mullite tube,

6 ........ benzene,

7 ........ propane,

8 ........ hydrogen,

9 ........ burner,

4 ........ collecting tank,

10 ....... porcelain crucible,

11 ....... solution of benzene with dissolved ferrocene,

12 ....... air,

15 ....... propane,

21 ....... gas-introduction port,

22 ....... ferrocene,

23 ....... sulfur

# INTERNATIONAL SEARCH REPORT

0214302

International Application No. **PCT/JP86/00082**

## I. CLASSIFICATION OF SUBJECT MATTER (if several classification symbols apply, indicate all)

According to International Patent Classification (IPC) or to both National Classification and IPC

Int.Cl$^4$  D01F9/12, C30B29/60 29/62

## II. FIELDS SEARCHED

| | Minimum Documentation Searched |
|---|---|
| Classification System | Classification Symbols |
| IPC | D01F9/12, C30B29/60 29/62 |

Documentation Searched other than Minimum Documentation
to the Extent that such Documents are Included in the Fields Searched

| | | |
|---|---|---|
| Jitsuyo Shinan Koho | 1926 – 1985 | |
| Kokai Jitsuyo Shinan Koho | 1971 – 1985 | |

## III. DOCUMENTS CONSIDERED TO BE RELEVANT

| Category* | Citation of Document, with indication, where appropriate, of the relevant passages | Relevant to Claim No. |
|---|---|---|
| A | JP, A, 56-118913 (Kawakado Shohachi, Egashira Makoto, Katsuki Hiroaki) 18 September 1981 (18. 09. 81) (Family: none) | 5 |
| A | JP, A, 52-103528 (Showa Denko Kabushiki Kaisha) 30 August 1977 (30. 08. 77) (Family: none) | 1-5 |

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step
"Y" document of particular relevance; the claimed invention cannot be considered to involve an inventive step when the document is combined with one or more other such documents, such combination being obvious to a person skilled in the art
"&" document member of the same patent family

## IV. CERTIFICATION

| Date of the Actual Completion of the International Search | Date of Mailing of this International Search Report |
|---|---|
| April 25, 1986 (25. 04. 86) | May 12, 1986 (12. 05. 86) |
| International Searching Authority | Signature of Authorized Officer |
| Japanese Patent Office | |

Form PCT/ISA/210 (second sheet) (October 1981)